# EUROPÄISCHE PATENTSCHRIFT

(11) **EP 4 144 450 B1**
(45) Veröffentlichungstag und Bekanntmachung des Hinweises auf die Patenterteilung: **07.08.2024**
(21) Anmeldenummer: 22000210.9
(22) Anmeldetag: 06.09.2022
(51) Int. Cl.: B08B 15/00, F24F 3/167, F24F 3/044, F24F 11/00, B01D 46/00, B01D 46/42

(54) **VERFAHREN ZUM REINIGEN VON BEI EINEM BEARBEITUNGSPROZESS IN EINEM REINRAUM/TROCKENRAUM ENTSTEHENDER ABLUFT SOWIE ANLAGE ZUR DURCHFÜHRUNG DES VERFAHRENS**
METHOD FOR CLEANING EXHAUST AIR GENERATED IN A PROCESSING PROCESS IN A CLEAN ROOM/DRY ROOM, AND SYSTEM FOR CARRYING OUT THE METHOD
PROCÉDÉ ET INSTALLATION POUR LA PURIFICATION DE L'AIR D'ÉCHAPPEMENT PRODUIT LORS D'UN PROCESSUS DE TRAITEMENT DANS UNE SALLE BLANCHE/SÈCHE

(30) Priorität: 07.09.2021 DE 102021004571
(43) Veröffentlichungstag der Anmeldung: 08.03.2023
(73) Patentinhaber: Camfil APC GmbH, 78532 Tuttlingen (DE); Exyte Management GmbH, 70376 Stuttgart (DE)
(72) Erfinder: EBERHARDT, Klaus, 71665 Vaihingen/Enz (DE); HUBALEK, Karsten, 01237 Dresden (DE); HANDTE, Jakob, 8598 Bottighofen (CH)
(74) Vertreter: Kohl, Karl-Heinz

(56) Entgegenhaltungen:
- WO-A1-2016/064321
- WO-A1-2021/151531
- DE-A1- 102005 050 010
- DE-U1- 202004 001 619
- DE-U1- 202009 012 529
- FR-A1- 2 369 023
- FR-A1- 2 987 388
- SE-A1- 1 400 504

## Beschreibung

Die Erfindung betrifft ein Verfahren zum Reinigen von bei einem Bearbeitungsprozess, insbesondere bei der Batteriezellfertigung, der in einem Reinraum/Trockenraum entstehenden Abluft sowie eine Anlage zur Durchführung eines solchen Verfahrens 12

Beim Bearbeitungsprozess in einem Reinraum/Trockenraum wie in der FR 2 987 388 A1 beschrieben entstehen feste und/oder gasförmige Partikel, die von der im Reinraum/Trockenraum strömenden Reinluft/Trockenluft mitgenommen werden. Die so entstehende Abluft wird der Filtereinheit zugeführt, mit der die in der Abluft befindlichen Partikel gefiltert werden. Die auf diese Weise gereinigte und aufbereitete Abluft wird als Reinluft/Trockenluft wieder dem Reinraum/Trockenraum zugeführt. Je nach Anforderung hinsichtlich des Bearbeitungsprozesses ist eine aufwändige Prozessführung notwendig, insbesondere im Hinblick auf die Betriebs- und Produktkosten.

Der Erfindung liegt die Aufgabe zugrunde, das Verfahren und die Anlage so auszubilden, dass eine energiegünstige Prozessführung möglich ist.

Diese Aufgabe wird beim Verfahren erfindungsgemäß mit den Merkmalen des Anspruches 1 und bei der Anlage erfindungsgemäß mit den Merkmalen des Anspruches 12 gelöst.

Beim erfindungsgemäßen Verfahren wird die im Reinraum/Trockenraum befindliche Reinluft/Trockenluft verwendet, um einen Volumenstrom im Prozessbereich zu erzeugen, welcher die im Prozessbereich anfallenden Emissionen erfasst und mitnimmt. Ein weiterer Teil der im Reinraum/Trockenraum strömenden Reinluft/Trockenluft wird zur Erzielung wenigstens einer Querströmung herangezogen, die quer gegen den Volumenstrom gerichtet ist und den Prozessbereich gegen den Reinraum/Trockenraum abschirmt. Auf diese Weise wird zuverlässig verhindert, dass die Emissionen in den Reinraum/Trockenraum gelangen. Vielmehr werden die Emissionen vom Volumenstrom vollständig erfasst und der Filtereinheit zugeführt. Dort kann die Abluft von den Emissionen befreit und, nach erneuter Aufbereitung, als neue Zuluft dem Reinraum/Trockenraum zugegeben werden.

Die Querströmung befindet sich in einem solchen Bereich, in dem die Gefahr besteht, dass Emissionen im Prozessbereich nicht vom Volumenstrom erfasst werden. Sie werden von der Querströmung abgefangen. Da die Querströmung in Richtung auf den Volumenstrom gerichtet ist, werden die von der Querströmung abgefangenen Emissionen dem Volumenstrom zugeführt, so dass diese von ihm zur Filtereinheit gefördert werden.

Vorteilhaft ist die Querströmung impulsarm ausgebildet. Dadurch entstehen in dem Bereich, in dem die Querströmung auf den Volumenstrom trifft, keine für die Abführung der Emissionen schädlichen Verwirbelungen.

Besonders vorteilhaft ist es, wenn zu beiden Seiten des Volumenstromes jeweils eine Querströmung aufgebaut wird. Dadurch ist eine hervorragende Abschirmung des Prozessbereiches gegen den umgebenden Reinraum/Trockenraumbereich gewährleistet.

Damit die Emissionen wirkungsvoll und zuverlässig vom Prozessbereich abgeleitet werden können, wird der Volumenstrom in vorteilhafter Weise als Freistrahl über den Prozessbereich geleitet.

Durch die Verwendung des Freistrahls für den Volumenstrom wird nach dem Injektorprinzip Sekundärluft aus dem Reinraum/Trockenraum angesaugt, was die Sicherheit erhöht, dass sämtliche im Prozessbereich entstehenden Emissionen vom Volumenstrom erfasst werden.

Bei dem erfindungsgemäßen Verfahren ist der Prozessbereich an einer im Reinraum/Trockenraum angeordneten Prozessmaschine vorgesehen. Daher kann der Volumenstrom sowie die Querströmung lediglich im Bereich dieser Prozessmaschine erzeugt werden, wodurch erhebliche Energiekosten gespart werden.

Bei einer weiteren erfindungsgemäßen Ausbildung ist der Prozessbereich in einem Schutzgehäuse vorgesehen, das in einem Außengehäuse der Prozessmaschine untergebracht ist. Verfahrensmäßig sind die Drücke im Gehäuse und im Außengehäuse so eingestellt, dass im Innenraum des Schutzgehäuse Unterdruck und im Innenraum des Außengehäuses Überdruck herrscht. Dadurch wird zuverlässig verhindert, dass aus dem Schutzgehäuse nach außen in den Reinraum/Trockenraum Schadstoffe gelangen. Bei einer bevorzugten Ausführungsform wird hierbei die im Schutzgehäuse entstehende Abluft zumindest nahezu vollständig, vorteilhaft vollständig, abgezogen und durch eine kleinere Menge an Rückluft ersetzt. Die Luftmengendifferenz wird durch Zuführung von konditionierter Zuluft in das Außengehäuse ausgeglichen.

Infolge dieser Ausführung wird der Unterdruck im Schutzgehäuse aktiv geregelt, wodurch sichergestellt ist, dass keine Verunreinigung mit Giftstoffen in den mit Personen besetzten Reinraum/Trockenraum gelangen.

Vorteilhaft tritt die überschüssige konditionierte Zuluft aus dem Außengehäuse in den Reinraum/Trockenraum aus.

Um die konditionierte Zuluft zu erhalten, wird dem Reinraum/Trockenraum Abluft entnommen und konditioniert, bevor die konditionierte Zuluft wieder dem Außengehäuse der Prozessmaschine zugeführt wird.

Die gereinigte Abluft wird in vorteilhafter Weise mit zumindest gefilterter Außenluft vor dem Eintritt in den Reinraum/Trockenraum gemischt. Dadurch ist es möglich, insbesondere bei hohen Umgebungsanforderungen einen Teil der im Kreislauf geführten Luft durch gefilterte Außenluft zu ersetzen.

In vorteilhafter Weise kann die gereinigte Abluft, bevor sie wieder als Zuluft dem Reinraum/Trockenraum zugeführt wird, konditioniert werden. Hierbei kann die Luft regeneriert und/oder entfeuchtet werden. Insbesondere kann durch die Konditionierung eine gewünschte Taupunkttemperatur der dem Reinraum/Trockenraum zuzuführenden Luft eingestellt werden.

Ein Teil der Abluft kann in die Umgebung abgegeben werden. Dieser Teil wird durch die zugeführte und gefilterte Außenluft ersetzt.

Der Zugang zur Prozessmaschine innerhalb des Reinraumes/Trockenraumes erfolgt in vorteilhafter Weise durch eine Luftschleuse, über die beispielsweise das zur Bearbeitung erforderliche Material zugeführt bzw. das bearbeitete Material wieder zurückgeführt/ausgeschleust wird.

In vorteilhafter Weise wird auch dieser Luftschleuse ein Teil der Reinluft/Trockenluft aus dem Reinraum/Trockenraum zugeführt.

Die aus der Luftschleuse austretende Luft steht bevorzugt unter einem Überdruck, bezogen auf den Druck im Reinraum/Trockenraum. Dadurch wird verhindert, dass bei der Zuführung des zu bearbeitenden Materials in die Prozessmaschine Verunreinigungen in den Prozessbereich gelangen. Dies ist insbesondere dann von Vorteil, wenn besonders partikelempfindliche Materialien bearbeitet werden sollen.

Bei der erfindungsgemäßen Anlage ist die im Reinraum/Trockenraum angeordnete Prozessmaschine mit offenen Lufteintritten versehen, über die Teile der Reinluft/Trockenluft in die Prozessmaschine eintreten können, um dort den Volumenstrom im Prozessbereich und die Querströmung zu bilden. Für den Volumenstrom und die Querströmung steht somit Reinluft/Trockenluft zur Verfügung.

Die Prozessmaschine ist in vorteilhafter Weise wenigstens an einer Seite, vorzugsweise aber an beiden, in Bezug auf den Prozessbereich einander gegenüberliegenden Seiten mit jeweils einem Zuführkanal versehen, der in Richtung auf den Prozessbereich luftdurchlässig ist. Die in die Zuführkanäle eintretende Reinluft/Trockenluft kann daher durch die luftdurchlässige Seite zur Bildung der Querströmung aus den Zuführkanälen austreten.

Bei einer weiteren erfindungsgemäßen Ausgestaltung weist die Prozessmaschine der erfindungsgemäßen Anlage ein Außengehäuse auf, das ein Schutzgehäuse aufnimmt, in dem die Prozessbearbeitung vorgenommen wird. Der Innenraum des Schutzgehäuses steht unter Unterdruck und der Innenraum des Außengehäuses unter Überdruck. Beide Innenräume sind miteinander strömungsverbunden. Da im Schutzgehäuse Unterdruck und im Außengehäuse Überdruck herrscht, können aus dem Schutzgehäuse keine Verunreinigungen nach außen gelangen.

Das Schutzgehäuse ist in vorteilhafter Weise an eine Filter-Ventilator-Einrichtung angeschlossen, mit der die Abluft aus dem Schutzgehäuse entsprechend gereinigt werden kann.

In das Außengehäuse der Prozessmaschine mündet in vorteilhafter Weise wenigstens eine Zuluftleitung, über die die Zuluft in das Außengehäuse gelangen kann.

Für den Volumenstrom ist die Prozessmaschine in vorteilhafter Weise mit wenigstens einer Luftführung versehen. Dadurch kann der Volumenstrom gezielt zum Prozessbereich der Prozessmaschine geführt werden.

Bei einer vorteilhaften Ausführungsform ist die Filtereinheit mit wenigstens einem Filterelement für Partikel versehen. Das Filterelement kann beispielhaft eine Filtermembran aufweisen, welche beim Durchtritt der Abluft die Partikel zurückhält. Außerdem ist die Anströmseite dieses Filterelementes mit der adsorbierenden Additivschicht versehen, welche die gasförmigen Partikel in der Abluft abfängt.

Die Additivschicht ist vorteilhaft ein Pulver, das beispielsweise durch einen Blas- oder Sprühvorgang auf das Filterelement aufgetragen wird. Die pulverförmige Additivschicht schützt darüber hinaus das Filterelement, insbesondere die Filtermembran, vor einem Verkleben durch klebrige Schadstoffe. Dadurch besteht nicht die Gefahr, dass bei einer Reinigung des Filterelementes innerhalb der Filtereinheit klebrige Schadstoffe am Filterelement trotz Reinigungsvorgang hängen bleiben.

Die Reinigung des Filterelementes erfolgt vorteilhaft mit Hilfe einer Druckluftstoßabreinigung.

Da die Filtereinheit das Filterelement für die Partikel sowie die Additivschicht für die gasförmigen Bestandteile aufweist, erfolgt die Filterung in einem einzigen Prozess an der Filtereinheit.

Falls beim Bearbeitungsprozess kanzerogene Stoffe freigesetzt werden sollten, ist der Filtereinheit bevorzugt wenigstens ein Sicherheitsfilter nachgeschaltet. Er fängt die kanzerogenen Stoffe ab, so dass die im Reinraum/Trockenraum arbeitenden Personen nicht gefährdet sind. Als Sicherheitsfilter kann je nach Anforderungen ein Filter der Staubklasse H eingesetzt werden.

Die mittels der Filtereinheit gereinigte Abluft wird vorteilhaft einer nachgeschalteten Konditioniereinrichtung zugeführt, mit der die gereinigte Luft regeneriert und/oder entfeuchtet und auf die erforderliche Taupunkttemperatur gebracht wird, bevor die Luft als Zuluft dem Reinraum/Trockenraum zurückgeführt wird.

Die Erfindung wird anhand zweier in den Zeichnungen dargestellter Ausführungsbeispiele näher erläutert. Es zeigen:
- Fig. 1: in schematischer Darstellung sowie in Draufsicht ein Fließbild einer erfindungsgemäßen Anlage,
- Fig. 2: in schematischer Darstellung und in Draufsicht eine in einem Reinraum/Trockenraum untergebrachte Prozessmaschine,
- Fig. 3: in schematischer Darstellung eine Filter-Ventilator-Einrichtung der Anlage gemäß Fig. 1,
- Fig. 4: in schematischer Darstellung die Zuführung eines Volumenstromes aus dem Reinraum/Trockenraum in die Prozessmaschine,
- Fig. 5: in schematischer Darstellung ein Luftführungselement der Prozessmaschine,
- Fig. 6: in schematischer Darstellung eine Konditioniereinrichtung der erfindungsgemäßen Anlage,
- Fig. 7: in einer Darstellung entsprechend Fig. 1 eine weitere Ausführungsform einer erfindungsgemäßen Anlage.

Die nachfolgend beschriebenen Anlagen werden zur Zellfertigung für Batterien eingesetzt. Dieser Anwendungsfall ist allerdings nur als bevorzugtes Ausführungsbeispiel zu verstehen. Die Anlage kann auch für andere Anwendungsfälle eingesetzt werden, bei denen vergleichbare Anforderungen erfüllt werden müssen.

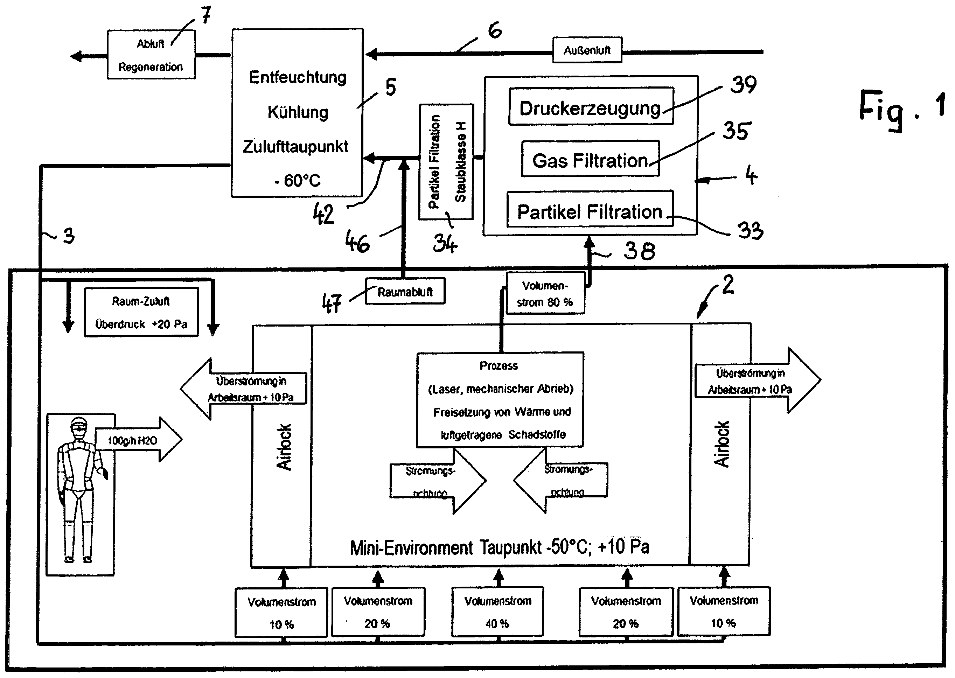

Die Anlage gemäß den Fig. 1 bis 6 hat wenigstens einen Reinraum/Trockenraum 1, in dem wenigstens eine Prozessmaschine 2 untergebracht ist. In bzw. auf der Prozessmaschine 2 erfolgt die Bearbeitung der für die Zellfertigung für Batterien vorgesehenen Teile. Bei der Zellfertigung wird von einem beschichteten Coil ein Band abgewickelt, aus dem bevorzugt mittels Laser Anoden- und Kathodensheets herausgeschnitten werden. Bei diesem Trennprozess werden teilweise giftige Stoffe frei, die erfasst und nachgängig gereinigt werden müssen.

In der Anlage bzw. im Reinraum/Trockenraum 1 werden weiter Pouch-Zellen gestapelt oder Rundzellen bzw. prismatische Zellen gewickelt. Für diese Prozesse ist insbesondere eine trockene Luftumgebung erforderlich. Die durch Abrieb freigesetzten Partikel werden zuverlässig durch eine entsprechende Luftströmung mit entsprechender Nachströmung von konditionierter Umgebungsluft abgefangen.

Innerhalb der Anlage werden die Zellableiter kontaktiert und in eine Hülle eingebracht, die anschließend verschlossen wird. Auch bei diesen Prozessen, die vorzugsweise ebenfalls mittels Laseranwendung durchgeführt werden, werden luftgetragene Emissionen freigesetzt, die durch die Anlage zuverlässig abgeführt werden.

Im dargestellten und beschriebenen Beispielsfall wird ein Reinraum/Trockenraum der Klasse 8 eingesetzt, dessen Taupunkt auf - 20°C eingestellt ist. Diese Reinraumklasse und dieser Taupunkt sind nicht beschränkend zu verstehen. Je nach den im Reinraum/Trockenraum durchzuführenden Arbeiten kommen auch andere Reinraumklassen und Taupunkte in Betracht.

Dem Reinraum/Trockenraum 1 wird über wenigstens eine Zuleitung 3 Raumzuluft als Reinluft/Trockenluft zugeführt. Der Reinraum/Trockenraum steht unter einem geringen Überdruck, der beispielsweise 20 Pa betragen kann.

Die Raumzuluft wird in noch zu beschreibender Weise der Prozessmaschine 2 zugeführt. Die Raumzuluft nimmt die an der Prozessmaschine 2 entstehenden Partikel und gasförmigen Emissionen mit. Der größte Teil der Raumzuluft wird als Volumenstrom wenigstens einer Filter-Ventilator-Einrichtung 4 zugeführt, die vorteilhaft außerhalb des Reinraumes/Trockenraumes 1 angeordnet ist und mit der die Partikel und sonstigen Schadstoffe entfernt werden.

Der gereinigte Volumenstrom wird einer Konditioniereinrichtung 5 zugeführt. Vor dem Eintritt in die Konditioniereinrichtung 5 kann dem gereinigten Volumenstrom aus dem Reinraum/Trockenraum 1 Raumzuluft zugeführt werden. In der Konditioniereinrichtung 5 wird die Luft entfeuchtet, gekühlt und auf den erforderlichen Taupunkt eingestellt.

Die konditionierte Luft wird dann als Raumzuluft erneut dem Reinraum/Trockenraum 1 zugeführt.

Wie Fig. 1 zeigt, kann der Konditioniereinrichtung 5 Außenluft 6 zugeführt werden, um Luftverluste auszugleichen.

Es besteht ferner die Möglichkeit, einen Teil 7 der konditionierten Luft einer (nicht dargestellten) Regeneriereinrichtung zuzuführen.

Die Prozessmaschine 2 ist so ausgebildet, dass in ihr unterschiedlich gerichtete Luftströme so erzeugt werden, dass die beim Bearbeitungsprozess entstehenden Substanzen und gasförmigen Emissionen zuverlässig erfasst und aus dem Reinraum/Trockenraum 1 herausgeführt und der Filter-Ventilator-Einrichtung 4 zugeführt werden.

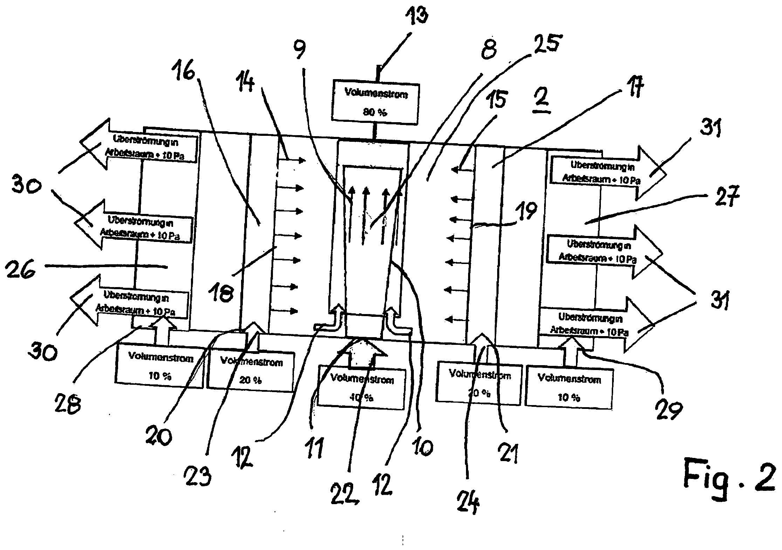

Der Prozessbereich ist in Fig. 2 mit 8 bezeichnet. Über diesen Prozessbereich 8 wird ein durch Pfeile gekennzeichneter Volumenstrom 9 erzeugt, welcher die im Prozessbereich 8 entstehenden Schadstoffe (Partikel, Gase) mitnimmt. Der Volumenstrom 9 ist ein Teil der Raumzuluft des Reinraumes/Trockenraumes 1. Im Beispielsfall wird etwa 40% der Raumzuluft zur Bildung des Volumenstromes 9 dem Prozessbereich 8 zugeführt.

Zur Führung des Volumenstromes 9 über den Prozessbereich 8 hinweg ist die Prozessmaschine 2 mit einer entsprechenden Luftführung 10 versehen, die dafür sorgt, dass der Volumenstrom 9 vom Lufteintrittsbereich 11 aus gezielt dem Prozessbereich 8 zugeführt wird.

Die Luftführung 10 ist vorteilhaft so ausgebildet, dass sie nach dem Venturi-Prinzip arbeitet. Dies hat zur Folge, dass durch den Volumenstrom 9 Sekundärluft 12 aus dem Reinraum/Trockenraum angesaugt wird. Die Luftführung 10 ist so gestaltet, dass der gesamte Prozessbereich 8 vom Volumenstrom 9 erfasst wird. Er nimmt die beim Bearbeitungsprozess entstehenden Partikel, gasförmigen Bestandteile und dergleichen mit. Die so gebildete Abluft 13 wird der nachgeschalteten Filter-Ventilator-Einrichtung 4 (Fig. 1) zugeführt.

Um sicherzustellen, dass die Partikel und Emissionen nicht aus der Prozessmaschine 2 nach außen in den Reinraum/Trockenraum 1 gelangen, wird der Prozessbereich 8 quer zum Volumenstrom 9 von einer Querströmung 14, 15 beaufschlagt. Gemäß Fig. 2 strömt die Querströmung 14, 15 voneinander gegenüberliegenden Seiten aus quer, vorzugsweise senkrecht, zum Volumenstrom 9 in den Prozessbereich 8. Vorteilhaft ist die Querströmung 14, 15 über die gesamte, in Strömungsrichtung des Volumenstromes 9 gemessene Breite der Prozessmaschine 2 vorgesehen. Die Querströmungen 14, 15 bilden jeweils eine Art Schutzvorhang, durch den sichergestellt ist, dass im Prozessbereich 8 entstehende Partikel und Emissionen, die vom Volumenstrom 9 nicht erfasst werden sollten, von den Querströmungen 14, 15 abgefangen werden.

Um die Querströmung 14, 15 zu erreichen, ist beiderseits des Prozessbereiches 8 jeweils ein Zuführkanal 16, 17 vorgesehen, dessen dem Prozessbereich 8 zugewandte Seitenwand 18, 19 luftdurchlässig ausgebildet ist. Die Seitenwände 18, 19 können beispielhaft durch ein Lochblechgitter gebildet sein.

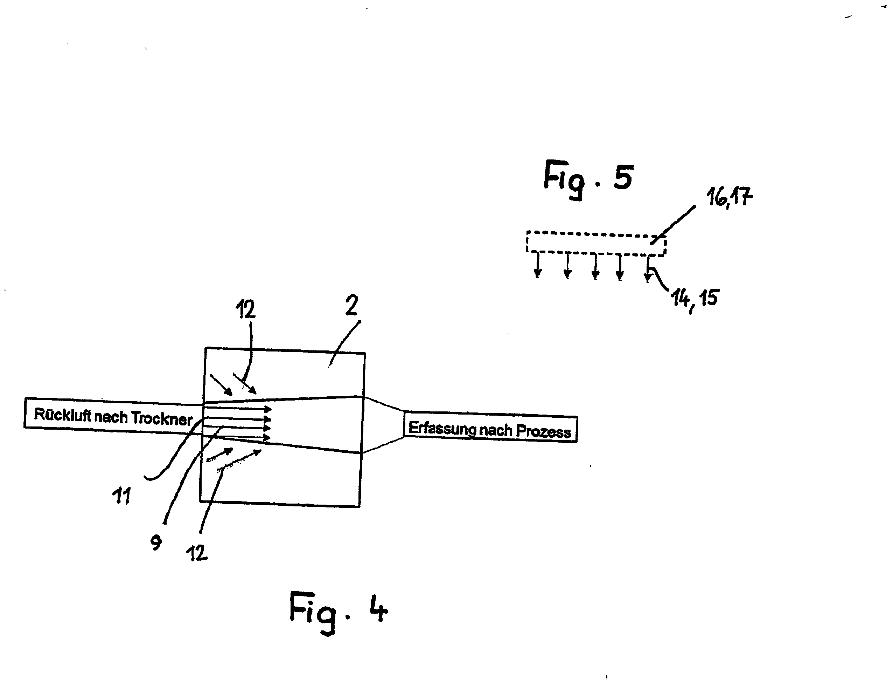

Eine andere Möglichkeit besteht darin, die Zuführkanäle 16, 17 jeweils durch einen Textilschlauch zu bilden. Ein solcher Textilschlauch ist beispielhaft in Fig. 5 dargestellt. Er ist so gestaltet und eingebaut, dass die in den Textilschlauch gelangende Luft nur in Richtung auf den Prozessbereich 8 zur Erzeugung der Querströmungen 14, 15 austreten kann.

Die Zuführkanäle 16, 17 sind an einem Ende 20, 21 zum Reinraum/Trockenraum 1 hin offen, so dass ein Teil der Raumzuluft über das Eintrittsende 20, 21 in die Zuführkanäle 16, 17 strömen kann.

Da die Querströmung 14, 15 lediglich als Absicherung dient, reicht es aus, wenn der Anteil der Raumzuluft, der in die Zuführkanäle 16, 17 gelangen soll, kleiner ist als der über den Lufteintrittsbereich 11 in die Luftführung 10 eintretende Teil der Raumzuluft.

In den Fig. 1 und 2 sind diese unterschiedlichen Luftströme mit 22 bis 24 bezeichnet.

Im Ausführungsbeispiel beträgt der in die Luftführung 10 gelangende Luftstromteil 22 der Raumzuluft etwa 40%, während der Anteil der in die Zuführkanäle 16, 17 gelangende Luftstromenteil 23, 24 jeweils etwa 20% beträgt.

In den Zuführkanälen 16, 17 baut sich ein entsprechender Druck auf, da die Luft lediglich durch die Seitenwände 18, 19 aus den Zuführkanälen 16, 17 gelangen kann.

Die Luftführung 10 sorgt für eine gerichtete Einströmung über den Prozessbereich 8 hinweg.

Die Querströmungen 14, 15 und der Volumenstrom 9 sind vorteilhaft so aufeinander abgestimmt, dass die Querströmungen 14, 15 vom Volumenstrom 9 mitgenommen werden, sobald die Querströmungen in den Wirkungsbereich des Volumenstromes 9 gelangen.

Die Querströmungen 14, 15 und der Volumenstrom 9 bilden ein sog. Mini-Environment 25, das mit dem Reinraum/Trockenraum 1 verbunden ist. Die im Reinraum/Trockenraum 1 befindliche Raumzuluft wird in das Mini-Environment 25 geleitet, so dass eine Wechselwirkung zwischen der Reinraumumgebung und dem Mini-Environment 25 der Prozessmaschine 2 erzielt wird.

An den voneinander abgewandten Seiten der Zuführkanäle 16, 17 ist vorteilhaft jeweils eine Luftschleuse 26, 27 vorgesehen. Sie ist in vorteilhafter Weise ebenfalls so vorgesehen, dass aus dem Reinraum/Trockenraum 1 Raumluft über wenigstens einen Lufteintritt 28, 29 in die Luftschleuse 26, 27 eintreten kann. Im dargestellten Beispielsfall gelangen in die Luftschleusen 26, 27 jeweils etwa 10% des Volumenstromes im Reinraum/Trockenraum.

Die Luftschleusen 26, 27, die optional vorgesehen sind, sind so ausgebildet, dass aus ihnen Luft unter leichtem Überdruck in den Reinraum/Trockenraum 1 austritt. Vorteilhaft erfolgt der Luftaustritt in den Reinraum/Trockenraum an den voneinander abgewandten Seiten der Luftschleusen 26, 27. Die aus den Luftschleusen 26, 27 austretende Luft 30, 31 hat beispielhaft einen Überdruck von 10 Pa gegenüber dem Druck der Raumzuluft im Reinraum/Trockenraum 1. Für den Durchtritt der Luft 30, 31 kann die entsprechende Wand der Luftschleuse 26, 27 mit einem Lochblech versehen sein.

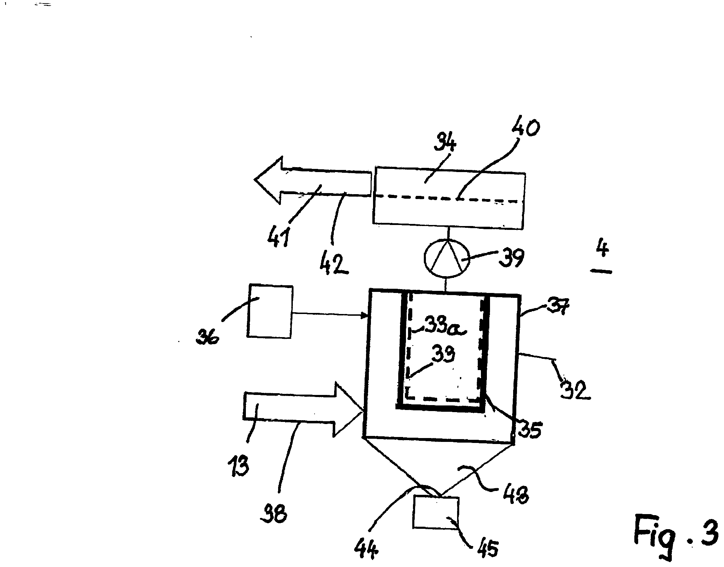

Die Abluft 13 aus dem Mini-Environment 25 wird der Filter-Ventilator-Einrichtung 4 zugeführt (Fig. 3). Diese Einrichtung hat wenigstens eine Filtereinheit 32 zur Abscheidung der gasförmigen und/oder partikelförmigen Abluftbestandteile.

Die Filtereinheit 32 weist wenigstens einen mechanischen Trockenfilter 33 auf, der an sich bekannt ist und darum nicht näher beschrieben wird. Vorteilhaft wird der Trockenfilter 33 mittels einer Druckluftstoßreinigung gereinigt.

Der Trockenfilter 33 ist mit einer Filtermembran 33a versehen, welche die in der Abluft 13 befindlichen Partikel abfängt, während die gereinigte Luft durch die Filtermembran 33a hindurchtritt und wenigstens einem nachgeschalteten Sicherheitsfilter 34 zugeführt wird.

Auf die von der Abluft 13 angeströmte Seite der Filtermembran 33a wird eine pulverförmige Additivschicht 35 aufgebracht, mit der gasförmige Abluftbestandteile adsorbiert werden. Die pulverförmige Additivschicht 35 besteht beispielhaft aus Kalziumcarbonat und Aktivkohle. Je nach abzufangenden gasförmigen Bestandteilen kann die Additivschicht 35 auch aus anderen Materialien bestehen.

Die auf der Filtermembran 33a befindliche Additivschicht hat den Vorteil, dass sie die Filtermembran 33a vor einem Verkleben durch klebrige Schadstoffe schützt, die beim beispielhaft beschriebenen Laserprozess frei werden.

Die Additivschicht 35 wird durch wenigstens eine Dosiereinheit 36 in die Filtereinheit 32 eingebracht. Sie hat ein Gehäuse 37, in der der Trockenfilter 33 mit der Additivschicht 35 untergebracht ist und an dessen Außenseite die Dosiereinheit 36 vorgesehen sein kann.

Die Dosiereinheit 36 kann selbstverständlich an jeder geeigneten Stelle innerhalb der Filter-Ventilator-Einrichtung 4 vorgesehen sein, so beispielsweise an einer Abluftleitung 38, über welche die Abluft 13 aus dem Mini-Environment 25 der Filter-Ventilator-Einrichtung 4 zugeführt wird. In diesem Falle wird die pulverförmige Additivschicht zusammen mit der Abluft 13 so in die Filtereinheit 32 eingebracht, dass sich die Additivschicht 35 auf der Filtermembran 33a absetzen kann.

Infolge der beschriebenen Ausbildung erfolgt die Reinigung der Abluft 13 von den partikelförmigen und gasförmigen Abluftbestandteilen in einem Abscheidungsprozess.

Der Sicherheitsfilter 34 stellt die Reinheit der Abluft 13 nach der Reinigung in der Filtereinheit 32 sicher. Als Sicherheitsfilter 34 wird ein Filter mit einer sehr hohen Reinigungsgüte der Staubklasse H eingesetzt. Durch diesen Sicherheitsfilter 34 werden insbesondere evtl. beim Bearbeitungsprozess anfallende kanzerogene Emissionen zuverlässig abgefangen, so dass die Sicherheit der Mitarbeiter im umgebenden Arbeitsbereich gewährleistet ist.

Damit die Abluft 13 aus dem Mini-Environment 25 zuverlässig abgesaugt wird, ist die Filter-Ventilator-Einrichtung mit wenigstens einer Ventilatoreinheit 39 versehen, mit welcher die Abluft 13 angesaugt wird.

Die Ventilatoreinheit 39 ist beispielhaft zwischen der Filtereinheit 32 und dem Sicherheitsfilter 34 angeordnet.

Der Sicherheitsfilter 34 ist in bekannter Weise ausgebildet und wird vorteilhaft mittels Differenzdruck überwacht. Hierbei wird der Druck der Luft vor und hinter einer Filtermembran 40 gemessen. Je mehr sich die Filtermembran zusetzt, desto größer wird der Differenzdruck. Daher kann festgestellt werden, wann die Filtermembran gereinigt oder ausgetauscht werden muss, um die geforderte Filterwirkung zu gewährleisten.

Die Filtereinheit 32 wird in bekannter Weise dann gereinigt, wenn die Filtermembran 33a an der Außenseite durch die abgeschiedenen Partikel so zugesetzt ist, dass eine zuverlässige Reinigung nicht mehr gewährleistet ist. In diesem Falle wird die Filtermembran 33a auf ihrer von der Additivschicht 35 abgewandten Rückseite mit Druckluftstößen beaufschlagt, die dazu führen, dass die auf der Anströmseite abgesetzten Partikel nach unten in einen Sammelraum 43 des Gehäuses 37 fallen. Er hat einen Auslass 44, der durch einen Verschluss 45, wie ein Verschlussventil, geöffnet und geschlossen werden kann. Durch Öffnen des Verschlusses 45 können die im Sammelraum 43 befindlichen abgeschiedenen Partikel aus dem Sammelraum 43 entfernt werden.

Die gereinigte Abluft strömt als Reinluft / Trockenluft 41 über eine Leitung 42 aus dem Sicherheitsfilter 34 zur Konditioniereinrichtung 5. Mit ihr wird die Reinluft / Trockenluft 41 vor dem Eintritt in den Reinraum/Trockenraum 1 konditioniert. Vorteilhaft wird der Reinluft/Trockenluft vor dem Eintritt in die Konditioniereinrichtung 5 über wenigstens eine Leitung 46 (Fig. 1) ein Teil der Raumabluft aus dem Reinraum/Trockenraum 1 zugeführt.

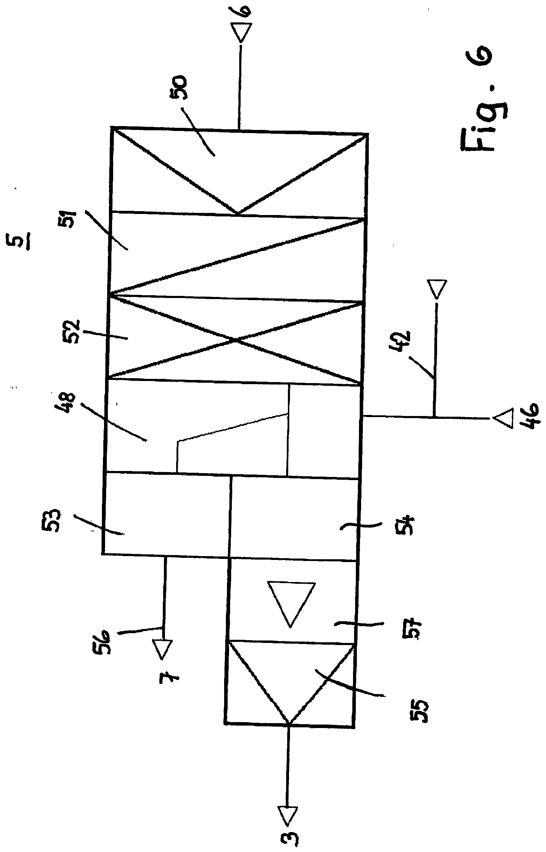

Anhand von Fig. 6 wird eine beispielhafte Ausgestaltung der Konditioniereinrichtung 5 beschrieben. Die Reinluft/Trockenluft 41 in der Leitung 42 und die Raumabluft 47 (Fig. 1) in der Leitung 46 gelangen gemeinsam in eine Mischkammer 48, in der eine Vermischung mit der von außen zugeführten Außenluft 6 erfolgt. Sie wird zunächst durch einen Außenluftfilter 50 geführt, um Partikel in der Außenluft 6 abzufangen. Anschließend gelangt die Außenluft 6 durch einen Erhitzer 51 und einen anschließenden Kühler 52, bevor die so konditionierte Außenluft in die Mischkammer 48 gelangt, in welcher die Außenluft mit der Reinluft/Trockenluft 41 vermischt wird.

Aus der Mischkammer 48 gelangt die Luft zu einem kleinen Teil über eine Regenerierstufe 53 und einem Fortluftkanal 56 ins Freie 7 und zum größeren Teil über eine Entfeuchtungsstufe 54 zu einem Zuluftfilter 55. Hier wird die konditionierte Zuluft nochmals gereinigt, bevor sie über die Zuleitung 3 dem Reinraum/Trockenraum 1 zugeführt wird.

In der Konditioniereinrichtung 5 wird die Luft auf die erforderliche Taupunkttemperatur gebracht, die im Beispielsfall - 60°C beträgt.

Die Konditioniereinrichtung 5 ist vorteilhaft mit wenigstens einer Ventilatoreinheit 57 versehen, mit der die Luft in der Konditioniereinrichtung 5 angesaugt und der Zuleitung 3 zugeführt wird.

Bei der beschriebenen Verfahrensführung wird aufgrund der hohen Umgebungsanforderungen ein Teil der emissionsbeladenen Abluft durch die konditionierte Außenluft 6 ersetzt.

Die beschriebenen Vorgänge finden in konditionierter Umgebungsluft statt. Insbesondere im Hinblick auf die Feuchtigkeit der Raumluft wird eine entsprechend tiefe Taupunkt-Temperatur vorgesehen, die beispielsweise im Bereich von - 30°C bis - 60°C liegt.

Durch die Zuführung der Außenluft 6 in die Konditioniereinrichtung 5 werden die freiwerdenden Schadstoffe wie auch die Feuchtigkeit, die durch Bedienpersonal freigesetzt wird, ersetzt. Die zugeführte Außenluft 6 ersetzt auch denjenigen Anteil der Luft, der als Abluft 7 der Regenerierstufe 53 entzogen wird. In der Mischkammer 48 der Konditioniereinrichtung 5 wird diese zugeführte Außenluft 6 wirksam mit der von der Filter-Ventilator-Einrichtung 4 kommenden Reinluft/Trockenluft 41 vermischt.

Die Abluft aus dem Mini-Environment 25 wird in der beschriebenen Weise so aufbereitet, dass sie in das Mini-Environment 25 zurückgeführt werden kann.

Die rückgeführte, gereinigte und konditionierte Zuluft 3 wird aus dem Reinraum/Trockenraum 1 in die unterschiedlichen Zonen des Mini-Environments 25 zurückgeführt.

Die beschriebenen Aufteilungen dieser rückgeführten Reinluft/Trockenluft in die unterschiedlichen Zonen ist nicht beschränkend zu verstehen. Für den Prozess der Zellfertigung für Batterien sind die angegebenen Mengen an Volumenströmen vorteilhaft.

Ein großer Teil der Zuluft wird über die Luftführung 10 dem Prozessbereich 8 zugeführt, damit dort zuverlässig die entstehenden gasförmigen und festen Partikel abgeführt werden. Zur Erzeugung der Querströmungen 14, 15 ist ein geringerer Volumenstromanteil erforderlich, da die Querströmungen 14, 15 hauptsächlich die Aufgabe haben, den Prozessbereich 8 gegen den umliegenden Bereich des Reinraumes/Trockenraumes 1 abzuschirmen.

Die Querströmungen 14, 15 sind impulsarm ausgeführt, so dass der Energieaufwand gering gehalten werden kann.

Für die Luftschleusen 26, 27 ist nur ein geringer Anteil des Volumenstromes aus dem Reinraum/Trockenraum 1 erforderlich. Über die Luftschleusen 26, 27 wird das noch unbearbeitete Material in die Prozessmaschine 2 eingebracht bzw. die fertig bearbeiteten Teile von der Prozessmaschine 2 in den umliegenden Arbeitsraum innerhalb des Reinraumes 1 ausgebracht. Durch die Luftströme 30, 31 ist gewährleistet, dass eine gerichtete Strömung aus dem Mini-Environment 25 in den umliegenden Bereich des Reinraumes/Trockenraumes 1 aufgebaut wird.

Der Volumenstrom 9 über den Prozessbereich 8 hinweg ist als Freistrahl ausgeführt. Die Luftführung 10 stellt hierbei sicher, dass der Volumenstrom 9 gezielt zum Prozessbereich 8 geführt wird, um die dort entstehenden Partikel und Emissionen sicher aufzunehmen und abzuführen.

Da die rückgeführten, gereinigten und konditionierten Abluftströme aus dem Mini-Environment 25 geregelt und in der beschriebenen Weise an unterschiedlichen Stellen dem Mini-Environment 25 wieder zugeführt werden, entstehen gezielte Luftströmungen, die dafür sorgen, dass die Abluft 13 aus dem Mini-Environment 25 abgeführt wird und nicht mit der über den Lufteintrittsbereich 11 zugeführten gereinigten und konditionierten Zuluft in Kontakt kommt. Zudem wird zwischen dem Mini-Environment 25 und dem Umgebungsbereich im Reinraum/Trockenraum 1 in der beschriebenen Weise ein Druckgefälle erzeugt, das dafür sorgt, dass im Prozessbereich 8 entstehende Emissionen nicht in den umgebenden Arbeitsbereich gelangen.

Da im Beispielsfall beim Bearbeitungsprozess kanzerogene Stoffe freigesetzt werden können, ist die Filtereinheit 32 als sogenanntes Bag-in-Bag-out System emissionsreduziert ausgeführt. Solche Bag-in-Bag-out Filtersysteme sind bekannt und ermöglichen ein sicheres, einfaches und zuverlässiges Verfahren zur Entfernung von kontaminierten Partikelfiltern. Insbesondere bleibt das Wartungspersonal beim Filterwechsel vor einem direkten Kontakt mit den Filtern und den darin befindlichen Partikeln geschützt.

Infolge der Rückführung der gereinigten und konditionierten Luft werden die Betriebskosten zur Erzeugung der trockenen Luft erheblich reduziert. Dadurch werden auch erhebliche Einsparungen bezüglich der Produktkosten erreicht.

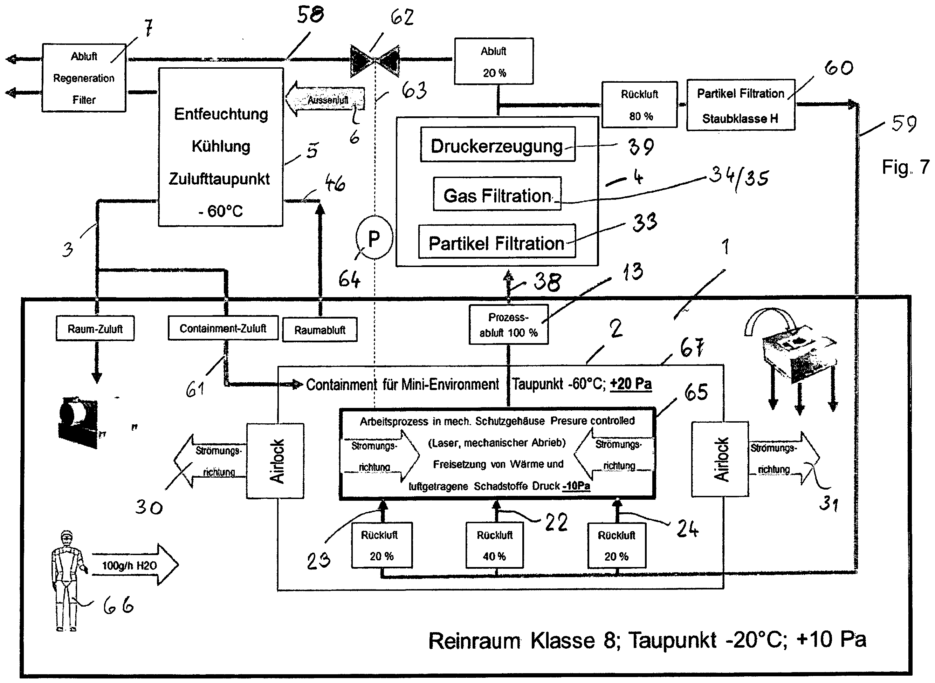

Fig. 7 zeigt eine weitere Ausführungsform einer Anlage, die im Wesentlichen gleich ausgebildet ist wie die zuvor beschriebene Anlage. Sie hat den Reinraum/Trockenraum 1, in dem die wenigstens eine Prozessmaschine 2 angeordnet ist, in bzw. auf welcher die Bearbeitung der für die Zellfertigung für Batterien vorgesehenen Teile durchgeführt wird. Wie bei der vorigen Ausführungsform wird für die Anlage ein Reinraum/Trockenraum 1 der Klasse 8 eingesetzt, dessen Taupunkt auf - 20° C eingestellt ist. Wie schon zur vorigen Ausführungsform ausgeführt, sind die Reinraumklasse und der Taupunkt nicht beschränkend zu verstehen. Der Reinraum/Trockenraum 1 steht unter einem geringen Überdruck, der beispielsweise 10 Pa betragen kann.

Die dem Reinraum/Trockenraum 1 zugeführte Raumzuluft nimmt, wie anhand des vorigen Ausführungsbeispieles erläutert, die an der Prozessmaschine 2 entstehenden Partikel und gasförmigen Emissionen mit.

Der Arbeitsprozess in der Prozessmaschine 2 findet vorteilhaft innerhalb eines Schutzgehäuses 65 statt, innerhalb dem die Schadstoffe bei der Prozessbearbeitung entstehen und durch den Luftstrom in der beschriebenen Weise zur Filter-Ventilator-Einheit 4 abgezogen werden. Im Schutzgehäuse 65 herrscht ein Unterdruck von beispielsweise -10 Pa. Aus dem Schutzgehäuse 65 wird die Abluft 13 zu 100 % abgezogen. Da das Schutzgehäuse 65 den Arbeitsbereich der Prozessmaschine 2 vom übrigen Bereich innerhalb der Prozessmaschine 2 trennt, ist sichergestellt, dass die gesamte Prozessabluft 13 aus dem Schutzgehäuse 65 abgesaugt wird.

Die Rückluft, die über die Rückluftleitung 59 wieder dem Schutzgehäuse 65 zugeführt wird, beträgt im Ausführungsbeispiel weniger als die abgesaugte Prozessluft 13, im Ausführungsbeispiel 80 %. Dies hat zur Folge, dass durch den Unterschied in der Menge der abgeführten Prozessluft 13 zur zugeführten Rückluft 22 bis 24 ein Unterdruck im Schutzgehäuse 65 entsteht, der beispielhaft -10 Pa beträgt. Dieser Unterdruck im Schutzgehäuse 65 bildet die Regelgröße für die Zuführung der Rückluft über die Rückluftleitung 59.

Das Schutzgehäuse 65 befindet sich in einem Außengehäuse 67, dessen Innenraum unter Überdruck steht, der beispielhaft +20 Pa beträgt. Der Innenraum des Außengehäuses 67 ist mit dem Innenraum des Schutzgehäuses 65 strömungsverbunden.

Der Überschuss an Containment-Zuluft 61 in der Prozessmaschine 2 führt dazu, dass die überschüssige Luftmenge 30, 31 aus der Prozessmaschine 2 in den Reinraum/Trockenraum 1 gelangt. Schadstoffbelastete Luft wird auf diese Weise zuverlässig am Eintritt in den Reinraum/Trockenraum 1 gehindert.

Durch die Containment-Zuluft 61 wird die Druckdifferenz zwischen dem Druck im Schutzgehäuse 65 und im Außengehäuse 67 innerhalb der Prozessmaschine 2 ausgeglichen, wobei der Überschuss an Luft über die Luftströme 30, 31 in den Reinraum/Trockenraum 1 gelangt.

Durch die beschriebene Ausbildung wird der Unterdruck im Schutzgehäuse 65 aktiv geregelt und dadurch sichergestellt, dass keine Verunreinigungen mit Giftstoffen in den mit den Personen 66 besetzten Reinraum/Trockenraum 1 gelangen.

Die das Schutzgehäuse 65 durchströmende Luft nimmt die beim Bearbeitungsprozess entstehenden Substanzen und gasförmigen Emissionen mit. Die so entstehende Prozessabluft wird zu 100 % über die Abluftleitung 38 der Filter-Ventilator-Einrichtung 4 zugeführt. Sie hat die Filtereinheit 32 (Fig. 3) zur Abscheidung der gasförmigen und/oder partikelförmigen Abfluftbestandteile aus der Prozessabluft. Die Filtereinheit 32 hat den wenigstens einen mechanischen Trockenfilter 33, mit dem die in der Prozessabfluft 13 befindlichen Partikel abgefangen werden. Die gereinigte Luft gelangt in den nachgeschalteten Gasfilter 34, 35, mit dem in der Luft befindliche gasförmige Bestandteile abgefangen werden. Außerdem ist die Filter-Ventilator-Einrichtung 4 mit der Ventilatoreinheit 39 versehen, durch welche sichergestellt ist, dass die Prozessabluft 13 zuverlässig in die Filter-Ventilator-Einrichtung 4 gesaugt wird.

Im Unterschied zur vorigen Ausführungsform wird nicht die gesamte gereinigte Abluft zur Regeneration weitergeführt. Beispielhaft wird nur etwa 20 % der gereinigten Abluft über wenigstens eine Leitung 58 der Regeneration zugeführt. Der restliche Teil der Luft, beispielsweise 80 %, wird zur Prozessmaschine 2 zurückgeführt. Dieser Teil der Rückluft wird von eventuell noch vorhandenen Partikeln gereinigt. Hierzu befindet sich in der Rückluftleitung 59 wenigstens ein Partikelfilter 60, vorteilhaft ein Staubklasse H-Filter.

Wie bei der vorigen Ausführungsform wird ein Teil der Rückluft, im Beispielsfall etwa 40 %, dem Prozessbereich 8 (Fig. 2) im Schutzgehäuse 65 zugeführt (Luftstrom 22). Den Zuführkanälen 16, 17 des Schutzgehäuses 65 (Fig. 2) wird ein Luftstromanteil von jeweils etwa 20 % (Luftströme 23, 24) zugeführt.

Im Unterschied zum vorigen Ausführungsbeispiel wird den Luftschleusen 26, 27 (Fig. 2), sofern sie vorgesehen sind, über die Rückluftleitung 59 keine Rückluft zugeführt. Stattdessen wird dem Außengehäuse 67 der Prozessmaschine 2 ein Teil der konditionierten Raumzuluft als Containment-Zuluft 61 zugeführt. Sie gelangt in die Luftschleusen 26, 27 (Fig. 2).

Die Containment-Zuluft 61 hat im Ausführungsbeispiel einen Taupunkt von - 60° C. Die Containment-Zuluft 61 steht unter einem Druck von beispielhaft +20 Pa, was zur Folge hat, dass ein Teil dieser Zuluft 61 in Form der Querströmung 14, 15 (Fig. 2) in die Zuführkanäle 16, 17 strömt.

Im Unterschied zur vorigen Ausführungsform gelangt von der Filter-Ventilator-Einrichtung 4 keine Rückluft in die Konditioniereinrichtung 5. Vielmehr wird ein Teil der Luft aus dem Reinraum/Trockenraum 1 über die Leitung 46 der Konditioniereinrichtung 5 zugeführt. Außerdem wird der Konditioniereinrichtung 5 entsprechend der vorigen Ausführungsform Außenluft 6 zugeführt. Innerhalb der Konditioniereinrichtung 5 wird die Raumabluft entfeuchtet, gekühlt und auf den erforderlichen Taupunkt gebracht, der im Ausführungsbeispiel bei -60° C liegt. Die Konditioniereinrichtung 5 ist gleich ausgebildet wie bei der vorigen Ausführungsform.

Die konditionierte Luft wird über die Zuleitung 3 als Raumzuluft dem Reinraum/Trockenraum 1 zugeführt. Ein Teil dieser konditionierten Raumzuluft wird in der beschriebenen Weise als Containment-Zuluft 61 in den Innenraum des Außengehäuses 67 geleitet.

Der Teil 7 der konditionierten Luft wird entsprechend der vorigen Ausführungsform der (nicht dargestellten) Regeneriereinrichtung zugeführt. Sie erhält über die Leitung 58 auch einen Teil der Abluft aus der Filter-Ventilator-Einrichtung 4 zugeleitet.

In der Leitung 58 befindet sich ein Schaltventil 62, mit dem der Zugang der Abluft aus der Filter-Ventilator-Einrichtung 4 zur Regeneriereinrichtung gesteuert werden kann Dadurch ist es möglich, der Regeneriereinrichtung je nach Stellung des Schaltventils 62 gezielt Abluft aus der Filter-Ventilator-Einrichtung 4 zuzuleiten.

Vorteilhaft kann mit dem Schaltventil 62 eine Leitung 63 geöffnet bzw. geschlossen werden, die das Schutzgehäuse 65 der Prozessmaschine 2 mit der Leitung 58 verbindet. In der Leitung 63 kann eine Ventilatoreinheit 64 sitzen, mit der Abluft aus dem Schutzgehäuse 65 zur Regeneriereinrichtung gefördert werden kann, wenn das Schaltventil 62 die Leitung 63 in Richtung auf die Leitung 58 freigibt.

## Patentansprüche

1. Verfahren zum Reinigen von bei einem Bearbeitungsprozess in einem Reinraum/Trockenraum (1) entstehender Abluft (13), die von einem Prozessbereich (8) abgezogen und wenigstens einer Filtereinheit (4) zugeführt wird, wobei der Prozessbereich (8) an einer im Reinraum/Trockenraum (1) angeordneten Prozessmaschine (2) vorgesehen ist, dem Reinraum/Trockenraum (1) Reinluft/Trockenluft entnommen und dem Prozessbereich (8) als Volumenstrom (9) zugeführt wird, der im Prozessbereich (8) anfallende Emissionen erfasst und mitnimmt, und wobei dem Reinraum/Trockenraum (1) ein weiterer Teil (23, 24, 61) der Reinluft/Trockenluft entnommen wird, der zur Bildung wenigstens einer Querströmung (14, 15) herangezogen wird, die quer gegen den Volumenstrom (9) gerichtet ist und den Prozessbereich (8) gegen den Reinraum/Trockenraum (1) abschirmt.

2. Verfahren nach Anspruch 1,
**dadurch gekennzeichnet, dass** die Querströmung (14, 15) impulsarm ist.

3. Verfahren nach Anspruch 1 oder 2,
**dadurch gekennzeichnet, dass** zu beiden Seiten des Volumenstromes (9) jeweils ein Querstrom (14, 15) aufgebaut wird.

4. Verfahren nach einem der Ansprüche 1 bis 3,
**dadurch gekennzeichnet, dass** der Volumenstrom (9) als Freistrahl über den Prozessbereich (8) geleitet wird, der vorteilhaft Sekundärluft (12) aus dem Reinraum/Trockenraum (1) ansaugt.

5. Verfahren nach einem der Ansprüche 1 bis 4,
**dadurch gekennzeichnet, dass** der Prozessbereich (8) in einem Schutzgehäuse (65) vorgesehen ist, das in einem Außengehäuse (67) der Prozessmaschine (2) untergebracht ist, und dass im Innenraum des Schutzgehäuses (65) Unterdruck und im Innenraum des Außengehäuses (67) Überdruck herrscht.

6. Verfahren nach Anspruch 5,
**dadurch gekennzeichnet, dass** die im Schutzgehäuse (65) entstehende Abluft (13) zumindest nahezu vollständig abgezogen und durch eine kleinere Menge an Rückluft ersetzt wird, und dass die Luftmengendifferenz durch Zuführung von konditionierter Zuluft (61) in das Außengehäuse (67) ausgeglichen wird.

7. Verfahren nach Anspruch 6,
**dadurch gekennzeichnet, dass** überschüssige konditionierte Zuluft (61) in den Reinraum/Trockenraum (1) austritt.

8. Verfahren nach Anspruch 6 oder 7,
**dadurch gekennzeichnet, dass** die konditionierte Zuluft (61) durch Konditionierung von dem Reinraum/Trockenraum (1) entnommener Raumluft erzeugt wird.

9. Verfahren nach einem der Ansprüche 1 bis 8,
**dadurch gekennzeichnet, dass** die gereinigte Abluft (41) mit zumindest gefilterter Außenluft (6) vor dem Eintritt in den Reinraum/Trockenraum (1) gemischt wird.

10. Verfahren nach einem der Ansprüche 1 bis 9,
**dadurch gekennzeichnet, dass** die gereinigte Abluft (41) vor dem Eintritt in den Reinraum/Trockenraum (1) konditioniert wird, wobei vorteilhaft ein Teil der konditionierten Luft (41) in die Umgebung abgegeben wird.

11. Verfahren nach einem der Ansprüche 1 bis 10,
**dadurch gekennzeichnet, dass** der Zugang zur Prozessmaschine (2) über wenigstens eine Luftschleuse (26, 27) erfolgt, wobei vorteilhaft die Luft aus der Luftschleuse (26, 27) unter Überdruck in den Reinraum/Trockenraum (1) zurückströmt.

12. Anlage zur Durchführung des Verfahrens nach einem der Ansprüche 1 bis 11, mit wenigstens einem Reinraum/Trockenraum (1), in dem wenigstens eine Prozessmaschine (2) untergebracht ist und der wenigstens eine Zuführung (3) für Reinluft/Trockenluft und wenigstens eine Rückleitung (38) für Abluft aufweist, wobei die Prozessmaschine (2) zum Reinraum/Trockenrauminneren offene Lufteintritte (11, 20, 21, 28, 29) aufweist, durch die die Anteile der Reinluft/Trockenluft zur Bildung des Volumenstromes (9) im Prozessbereich (8) der Prozessmaschine (2) und zur Bildung der Querströmung (14, 15) gelangen.

13. Anlage nach Anspruch 12,
**dadurch gekennzeichnet, dass** zumindest an einer Seite, vorzugsweise an beiden, in Bezug auf den Prozessbereich (8) einander gegenüberliegenden Seiten jeweils ein Zuführkanal (16, 17) vorgesehen ist, der in Richtung auf den Prozessbereich (8) luftdurchlässig ist.

14. Anlage nach Anspruch 12 oder 13,
**dadurch gekennzeichnet, dass** die Prozessmaschine (2) ein Außengehäuse (67) aufweist, das ein vorteilhaft an eine Filter-Ventilator-Einrichtung (4) angeschlossenes Schutzgehäuse (65) aufnimmt, dass der Innenraum des Schutzgehäuses (65) unter Unterdruck und der Innenraum des Außengehäuses (67) unter Überdruck steht, und dass beide Innenräume miteinander strömungsverbunden sind.

15. Anlage nach Anspruch 14,
**dadurch gekennzeichnet, dass** in das Außengehäuse (67) wenigstens eine Zuluftleitung (61) mündet.

## Claims

1. A method for cleaning exhaust gas (13) generated in a processing process in a clean room/drying room (1), which exhaust gas (13) is extracted from a process area (8) and fed to at least one filter unit (4), wherein the process area (8) is provided on a processing machine (2) arranged in the clean room/drying room (1), clean air/dry air is removed from the clean room/drying room (1) and fed to the process area (8) as a volume flow (9) that captures and takes away emissions generated in the process area (8), and wherein an additional portion (23, 24, 61) of the clean air/dry air is removed from the clean room/drying room (1) and drawn upon to form at least one crossflow (14, 15), which is directed transversely against the volume flow (9) and shields the process area (8) against the clean room/drying room (1).

2. The method according to claim 1,
**characterized in that** the crossflow (14, 15) is low-impulse.

3. The method according to claim 1 or 2, **characterized in that** a respective crossflow (14, 15) is built up on both sides of the volume flow (9).

4. The method according to one of claims 1 to 3, **characterized in that** the volume flow (9) is guided as an open jet over the process area (8), which advantageously sucks in secondary air (12) out of the clean room/drying room (1).

5. The method according to one of claims 1 to 4, **characterized in that** the process area (8) is provided in a protective housing (65), which is accommodated in an outer housing (67) of the processing machine (2), and that negative pressure prevails in the interior of the protective housing (65), and positive pressure prevails in the interior of the outer housing (67).

6. The method according to claim 5, **characterized in that** the exhaust air (13) generated in the protective housing (65) is at least almost completely extracted and replaced by a smaller quantity of return air, and that the difference in air quantity is compensated by feeding conditioned supply air (61) into the outer housing (67).

7. The method according to claim 6, **characterized in that** excess conditioned supply air (61) exits into the clean room/drying room (1).

8. The method according to claim 6 or 7, **characterized in that** the conditioned supply air (61) is generated by conditioning room air extracted from the clean room/drying room (1).

9. The method according to one of claims 1 to 8, **characterized in that** the purified exhaust air (41) is mixed with at least filtered outside air (6) before entering into the clean room/drying room (1).

10. The method according to one of claims 1 to 9, **characterized in that** the purified exhaust air (41) is conditioned before entering into the clean room/drying room (1), wherein a portion of the conditioned air (41) is advantageously released into the environment.

11. The method according to one of claims 1 to 10, **characterized in that** the processing machine (2) is accessed via at least one air lock (26, 27), wherein the air advantageously flows out of the air lock (26, 27) and back into the clean room/drying room (1) under a positive pressure.

12. A system for carrying our the method according to one of claims 1 to 11, with at least one clean room/drying room (1), in which at least one processing machine (2) is housed, and which has at least one feed line (3) for clean air/dry air and at least one return line (38) for exhaust air, wherein the processing machine (2) has air inlets (11, 20, 21, 28, 28) open toward the interior of the clean room/drying room, through which enter the portions of clean air/dry air for forming the volume flow (9) in the process area (8) of the processing machine (2) and for forming the crossflow (14, 15).

13. The system according to claim 12, **characterized in that** a respective feed channel (16, 17) is provided at least on one side, preferably on both sides lying opposite each other in relation to the process area (8), and is permeable to air in the direction toward the process area (8).

14. The system according to claim 12 or 13, **characterized in that** the processing machine (2) has an outer housing (67), which incorporates a protective housing (65) advantageously connected to a filter-fan device (4), that the interior of the protective housing (65) is under a negative pressure and the interior of the outer housing (67) is under a positive pressure, and that both interiors are connected with each other in terms of flow.

15. The system according to claim 14, **characterized in that** at least one supply air duct (61) enters into the outer housing (67).

## Revendications

1. Procédé pour la purification de l'air d'échappement (13) produit lors d'un processus de traitement dans une salle blanche/sèche (1), qui est éliminé d'une zone de traitement (8) et est dirigé au moins vers une unité de filtre (4), sachant que la zone de traitement (8) est prévue sur une machine de traitement (2) disposée dans la salle blanche/sèche (1), de l'air pur/sec est prélevé de la salle blanche/sèche (1) et est dirigé vers la zone de traitement (8) sous la forme d'un débit volumétrique (9), qui saisit et entraîne les émissions se produisant dans la zone de traitement (8) et sachant qu'une autre partie (23, 24, 61) de l'air pur/sec est prélevée de la salle blanche/sèche (1), qui est utilisée pour former au moins un écoulement transversal (14, 15), qui est dirigé transversalement contre le débit volumétrique (9) et protège la zone de traitement (8) contre la salle blanche/sèche (1).

2. Procédé selon la revendication 1,
***caractérisé en* ce *que*** l'écoulement transversal (14, 15) est pauvre en impulsions.

3. Procédé selon la revendication 1 ou 2,
***caractérisé en* ce** ***qu**'*un courant transversal (14, 15) est respectivement constitué aux deux côtés du débit volumétrique (9).

4. Procédé selon l'une quelconque des revendications 1 à 3,
***caractérisé en ce que*** le débit volumétrique (9) est conduit sous la forme d'un jet libre sur la zone de traitement (8), qui aspire avantageusement de l'air secondaire (12) de la salle blanche/sèche (1).

5. Procédé selon l'une quelconque des revendications 1 à 4, ***caractérisé en ce que*** la zone de traitement (8) est prévue dans une enceinte de protection (65), qui est placée dans une enveloppe extérieure (67) de la machine de traitement (2) et ***en ce que*** de la dépression règne dans l'espace intérieur de l'enceinte de protection (65) et de la surpression dans l'espace intérieur de l'enveloppe extérieure (67).

6. Procédé selon la revendication 5,
***caractérisé en ce que*** l'air d'échappement (13) se formant dans l'enceinte de protection (65) est au moins presque complètement évacué et est remplacé par une quantité plus faible en air de reflux et ***en ce que*** la différence de quantité d'air est équilibrée par apport d'air d'arrivée conditionné (61) dans l'enveloppe extérieure (67).

7. Procédé selon la revendication 6,
***caractérisé en ce que*** l'air d'arrivée conditionné (61) excédentaire sort dans la salle blanche/sèche (1).

8. Procédé selon la revendication 6 ou 7,
***caractérisé en ce que*** l'air d'arrivée conditionné (61) est produit par conditionnement de l'air atmosphérique prélevé de la salle blanche/sèche (1).

9. Procédé selon l'une quelconque des revendications 1 à 8,
***caractérisé en ce que*** l'air d'échappement purifié (41) est mélangé à au moins de l'air extérieur filtré (6) avant l'entrée dans la salle blanche/sèche (1).

10. Procédé selon l'une quelconque des revendications 1 à 9,
***caractérisé en ce que*** l'air d'échappement purifié (41) est conditionné avant l'entrée dans la salle blanche/sèche (1), sachant qu'une partie de l'air conditionné (41) est avantageusement dégagée dans l'environnement.

11. Procédé selon l'une quelconque des revendications 1 à 10,
***caractérisé en ce que*** l'accès à la machine de traitement (2) a lieu par au moins un sas d'air (26, 27), sachant que l'air reflue avantageusement du sas d'air (26, 27) sous surpression dans la salle blanche/sèche (1).

12. Installation pour l'exécution du procédé selon l'une quelconque des revendications 1 à 11, avec au moins une salle blanche/sèche (1), dans laquelle est placée au moins une machine de traitement (2) et qui comporte au moins une arrivée (3) pour l'air pur/sec et au moins une conduite de retour (38) pour l'air d'échappement,
sachant que la machine de traitement (2) pour la salle blanche/sèche comporte des entrées d'air ouvertes (11, 20, 21, 28, 29), à travers lesquelles les parties de l'air pur/sec parviennent pour former le débit volumétrique (9) dans la zone de traitement (8) de la machine de traitement (2) et pour former l'écoulement transversal (14, 15).

13. Installation selon la revendication 12,
***caractérisée en ce qu'***un conduit d'arrivée (16, 17) est respectivement prévu au moins sur un côté, de préférence sur les deux côtés opposés l'un à l'autre par rapport à la zone de traitement (8), qui est perméable à l'air en direction de la zone de traitement (8).

14. Installation selon la revendication 12 ou 13,
***caractérisée en ce que*** la machine de traitement (2) comporte une enveloppe extérieure (67), qui loge une enceinte de protection (65) avantageusement raccordée à un système filtre-ventilateur (4), ***en ce que*** l'espace intérieur de l'enceinte de protection (65) se trouve sous dépression et l'espace intérieur de l'enveloppe extérieure (67) sous surpression et ***en ce que*** les deux espaces intérieurs sont reliés en écoulement l'un à l'autre.

15. Installation selon la revendication 14,
***caractérisée en ce qu***'au moins une conduite d'alimentation d'air (61) débouche dans l'enveloppe extérieure (67).
